# FASCICULE DE BREVET EUROPEEN

(11) **EP 2 730 850 B1**
(45) Date de publication et mention de la délivrance du brevet: **23.08.2017**
(21) Numéro de dépôt: 13191540.7
(22) Date de dépôt: 05.11.2013
(51) Int. Cl.: F24F 3/16, A01K 1/00, F24F 12/00, B01D 46/00

(54) **Dispositif récupérateur de chaleur pour bâtiment d'élevage équipé d'un filtre à poussières amovible**
Wärmerückgewinnungsvorrichtung für Stallungsgebäude, die mit einem abnehmbaren Staubfilter ausgestattet ist
Heat-recovery device for livestock building equipped with a removable dust filter

(30) Priorité: 08.11.2012 FR 1260593
(43) Date de publication de la demande: 14.05.2014
(73) Titulaire: Lead Leroy Concept, 35530 Noyal Sur Vilaine (FR)
(72) Inventeur: Le Roy, Nicolas, 35200 RENNES (FR)
(74) Mandataire: Vidon Brevets & Stratégie

(56) Documents cités:
- EP-A1- 2 172 713
- EP-A1- 2 244 030
- EP-A1- 2 301 589
- DE-U1-202011 001 810
- GB-A- 1 300 389
- JP-A- S6 423 036

## Description

### 1. Domaine de l'invention

L'invention concerne le domaine de la conception et de la réalisation des équipements destinés à équiper les bâtiments d'élevage, notamment les bâtiments d'élevage de volailles.

Plus précisément, l'invention se rapporte à un dispositif récupérateur de chaleur destiné à équiper de tels bâtiments.

### 2. Art antérieur

Les bâtiments d'élevage, notamment de volailles, accueillent, pour chaque campagne d'élevage, un nombre important d'animaux. Ceux-ci doivent être élevés dans une atmosphère saine et à une température relativement élevée. Par exemple, en ce qui concerne les volailles, cette température est généralement comprise entre 25 °C et 35 °C selon le type et l'âge des volailles.

Le maintien de telles températures et une ventilation des bâtiments suffisante sont donc au rang des préoccupations constantes des éleveurs.

En effet, toute baisse ou hausse excessive de température dans un bâtiment d'élevage peut entraîner une surmortalité des animaux. Ce problème est particulièrement sensible avec les volailles. De telles variations de température peuvent être provoquées par une ventilation insuffisante ou excessive du bâtiment.

Une mauvaise ventilation des bâtiments peut aussi entraîner une augmentation du taux d'hygrométrie dans ceux-ci propice à la propagation de micro-organismes ainsi qu'une augmentation du taux d'ammoniac résultant de la décomposition des déjections. De tels phénomènes peuvent conduire à la nécessité de renouveler les litières sur lesquelles sont élevés les animaux plus souvent mais aussi à une surmortalité de ceux-ci.

La ventilation des bâtiments d'élevage peut être effectuée grâce à des trappes réparties dans le bâtiment et permettant l'entrée d'air extérieur dans ceux-ci. Toutefois, dans les cas fréquents où l'intérieur des bâtiments d'élevage doit être chauffé, l'apport d'air extérieur froid par de telles trappes contribue à baisser la température régnant dans le bâtiment et implique un surcoût énergétique pour maintenir celle-ci suffisamment élevée.

Il a est donc proposé dans l'art antérieur d'utiliser des dispositifs de récupération de chaleur de type air-air permettant de chauffer de l'air extérieur insufflé dans le bâtiment avec de l'air chaud plus humide extrait du bâtiment. De tels échangeurs permettent de limiter grandement le surcoût énergétique généré par la ventilation des bâtiments d'élevage. Le document DE 20 2011 001810 U1 décrit un dispositif récupérateur de chaleur de type air-air destiné à équiper un bâtiment d'élevage comprenant les caractéristiques du préambule de la revendication 1. Parmi les récupérateurs de chaleur destinés aux bâtiments d'élevage sur le marché, on trouve des dispositifs permettant de traiter des quantités d'air selon des débits plus ou moins élevés.

Selon les fournisseurs, certains de ces récupérateurs mettent en oeuvre des moyens échangeurs de chaleur tubulaires et d'autres mettant en oeuvre des moyens échangeurs de chaleur à plaques alvéolaires.

Dans ces derniers, les moyens en question incluent des plaques alvéolaires montées parallèles entre elles. L'air humide et chaud présent dans le bâtiment est extrait de celui-ci grâce à un premier ventilateur pour être rejeté à l'extérieur en transitant entre les plaques. De l'air frais et plus sec prélevé à l'extérieur du bâtiment grâce à un second ventilateur entre dans celui-ci en transitant à l'intérieur des plaques par des canaux appelés alvéoles formés dans celles-ci. Lors de ce transit, un transfert de calories de l'air sortant du bâtiment vers l'air entrant dans celui-ci se produit, la surface développée des alvéoles permettant d'augmenter le rendement de ce transfert.

La Demanderesse commercialise un récupérateur de chaleur de type air-air à plaques alvéolaires qui présente l'originalité d'être de petite taille et conçu pour traiter de petits débits d'air, en pratique de 1600 à 2500 m³/h. Un tel récupérateur peut donc être installé en plusieurs points du bâtiment d'élevage selon différents points de puisage d'air neuf extérieur et d'air vicié intérieur. Ceci autorise une meilleure aération du bâtiment et ne rend pas l'exploitant dépendant d'un seul dispositif. Pour permettre un rendement de transfert de chaleur optimisé grâce aux plaques alvéolaires, les alvéoles de celles-ci sont de petite taille, à savoir 3 à 8 mm. On entend par « taille des alvéoles » la largeur moyenne de la section transversale des canaux des plaques alvéolaires.

Les plaques alvéolaires d'un tel récupérateur de chaleur sont organisées en un module amovible, de forme essentiellement parallélépipédique, et son carter est muni d'une porte de sorte que le module peut être régulièrement sorti du récupérateur pour être nettoyé à fond.

Ce dispositif récupérateur de chaleur combine donc à la fois l'avantage de permettre un rendement élevé - grâce à des plaques alvéolaires dont les alvéoles sont de petites tailles et qui présentent donc une surface développée importante -, et celui de permettre un désencrassement facile des plaques alvéolaires - grâce à l'organisation en module amovible de celles-ci -.

L'air extrait des bâtiments d'élevage se caractérise notamment par le fait qu'il est chargé en poussières provenant pour une part des litières et pour une autre part des animaux eux-mêmes. Ceci est particulièrement vrai pour les bâtiments d'élevage de volailles. Afin d'éviter que ces poussières ne se déposent en trop grandes quantités sur les moyens échangeurs de chaleur et encrassent ceux-ci, certains récupérateurs de chaleur sont dotés de filtres à poussières qui filtrent l'air extrait du bâtiment. Ces filtres doivent être régulièrement démontés et nettoyés, ou changés, lorsqu'ils sont trop encrassés. Ces filtres sont constitués par une superposition de plusieurs - jusqu'à une dizaine - grilles en aluminium. Ils présentent en pratique une structure proche de celle des filtres équipant de nombreuses hottes d'aspiration des vapeurs de cuisines. De par cette structure, ils sont rigides et leur nettoyage peut s'avérer difficile et fastidieux. Leur démontage et leur nettoyage, ou bien leur changement, implique des temps de maintenance relativement importants qui, le cas échéant, se cumulent à ceux nécessaire au nettoyage des plaques alvéolaires..

Lorsqu'un bâtiment d'élevage est équipé d'une pluralité de tels dispositifs, ces temps de maintenance se voient multipliés.

### 3. Objectifs de l'invention

Un objectif de la présente invention est de proposer un récupérateur de chaleur à plaques alvéolaires organisées en module équipé d'un filtre à poussières permettant de retenir l'essentiel des poussières présentes dans l'air extrait du bâtiment mais dont le filtre peut être facilement et rapidement nettoyé sans avoir obligatoirement à être démonté.

Un autre objectif de la présente invention est de proposer un tel récupérateur de chaleur dont l'opération de nettoyage du filtre nécessite moins de temps que pour les dispositifs de l'art antérieur.

Encore un objectif de la présente invention est de décrire un tel récupérateur de chaleur qui permet d'espacer les opérations de nettoyage des plaques alvéolaires voire de rendre facultatives de telles opérations durant toute la campagne d'élevage d'un lot d'animaux.

Encore un autre objectif de la présente invention est de proposer un tel récupérateur de chaleur qui, dans au moins un mode de réalisation de l'invention, ne soit pas plus coûteux à fabriquer.

### 4. Exposé de l'invention

Ces objectifs, ainsi que d'autres qui apparaîtront dans la suite de la présente description, sont atteints grâce à l'invention qui concerne un dispositif récupérateur de chaleur de type air-air destiné à équiper un bâtiment d'élevage, comprenant un carter pourvu d'une prise d'air extérieur coopérant avec un premier ventilateur, d'une sortie d'air réchauffé, d'une prise d'air intérieur coopérant avec un second ventilateur, d'une sortie d'air refroidi, et une pluralité de plaques alvéolaires organisée en un module amovible, caractérisé et en ce que ladite prise d'air intérieur est équipée d'un filtre à poussières amovible constitué d'une toile, et en ce que ledit dispositif comprend des moyens d'inversion du sens de rotation dudit second ventilateur.

Ainsi, contrairement à ce qui a jusqu'ici été proposé dans l'art antérieur, le filtre à poussières équipant le dispositif récupérateur de chaleur selon la présente invention est constitué d'une toile. Une telle toile présente une structure souple, la rapprochant de la structure d'une moustiquaire. Elle pourra être constituée de fils résistants réalisés en différents matériaux adaptés. Notamment, cette toile pourra être réalisée en fils constitués de fibres de verre. Une telle structure permet de conférer à ce filtre amovible légèreté et maniabilité.

De plus, selon l'invention, les moyens d'inversion du sens de rotation dudit second ventilateur permettent, lorsqu'ils sont actionnés, de nettoyer un tel filtre sans avoir obligatoirement à le démonter, c'est-à-dire sans avoir à obligatoirement le désolidariser du carter du dispositif récupérateur de chaleur. En effet, l'air envoyé sur le filtre grâce à ce ventilateur permet alors de détacher les poussières qui avaient été retenues par celui-ci pour les renvoyer à l'intérieur du bâtiment. Cette opération est particulièrement efficace du fait que le filtre est constitué d'une toile et que les poussières qui s'y sont agglomérées peuvent beaucoup plus facilement en être délogés que si le filtre était constitué, selon l'art antérieur, d'une superposition de couches filtrantes.

Alors qu'il aurait semblé logique à l'homme de l'art de ne pas renvoyer ces poussières dans le bâtiment d'élevage dont elles avaient été extraites, la Demanderesse a constaté que le fait d'effectuer des nettoyages réguliers du filtre à poussières du dispositif selon l'invention, par inversion du sens de rotation du second ventilateur, par exemple quelques dizaines de secondes toutes les heures, permettait de renvoyer à chaque fois dans ce bâtiment des quantités faibles de poussières, ne nuisant pas à l'atmosphère régnant dans celui-ci. De plus, le renvoi des poussières à l'intérieur du bâtiment d'élevage permet de limiter la dissémination des poussières à l'extérieur du bâtiment et ainsi de répondre à d'éventuelles contraintes environnementales.

De même alors que l'homme de l'art était dissuadé d'inverser le sens de rotation du second ventilateur afin de ne pas faire entrer d'air extérieur frais supplémentaire dans le bâtiment d'élevage, la Demanderesse a constaté qu'une telle entrée d'air frais était sans incidence notable sur la température observée à l'intérieur du bâtiment d'élevage, du fait que les opérations de nettoyage du filtre étaient rapides.

Ainsi, l'invention permet de ne pas avoir à désolidariser systématiquement le filtre à poussières du reste du dispositif récupérateur de chaleur pour l'opération de nettoyage du filtre. Les temps de maintenance liés à l'entretien du filtre se trouvent donc considérablement diminués. En effet, pour nettoyer le filtre à poussières du dispositif, il suffit à l'opérateur de mettre à l'arrêt le second ventilateur puis d'inverser le sens de rotation de celui-ci. On notera que lors de cette opération il n'est pas nécessaire d'arrêter le fonctionnement du premier ventilateur. Les filtres des différents dispositifs équipant un bâtiment d'élevage pourront ainsi être facilement nettoyés, préférentiellement à tour de rôle, de façon à minimiser les quantités de poussières renvoyées dans ce bâtiment sur une période donnée.

Selon une variante particulièrement intéressante de l'invention, un élément formant guide-flux est intercalé entre ladite prise d'air intérieur et ledit filtre à poussières, ledit élément formant guide-flux étant réalisé en un matériau plein. Une telle pièce permet de concentrer l'efficacité du flux d'air de dépoussiérage du filtre propulsé par le second ventilateur lorsque son sens de rotation est inversé. Le matériau constituant cet élément guide-flux étant plein, c'est-à-dire non ajouré, cet élément permet d'accélérer la vitesse de l'air envoyé par le second ventilateur fonctionnant en mode inversé et ainsi d'augmenter la capacité de cet air à détacher les poussières fixées sur le filtre.

Préférentiellement un tel élément formant guide-flux est également amovible. Le filtre et le guide-flux associé peuvent ainsi être facilement désolidarisés du reste du dispositif. Une telle caractéristique peut permettre de faciliter ensuite l'ouverture du carter, et l'extraction du module de plaques alvéolaires contenues à l'intérieur de celui-ci en vue de son nettoyage.

Selon une variante, ledit filtre et ledit élément formant guide-flux sont montés solidaires. Ainsi, il est possible à un opérateur de désolidariser en même temps ces deux pièces du reste du dispositif. L'élément formant guide-flux fait alors également office de cadre supportant la toile, l'ensemble formant alors un tamis. Une telle disposition permet d'assurer que la toile est maintenue bien tendue même après de nombreuses manipulations.

Selon un aspect préférentiel de la présente invention, ladite prise d'air intérieur est essentiellement circulaire et ledit élément formant guide-flux présente une section essentiellement cylindrique adaptée à ladite prise d'air. De telles caractéristiques permettent également d'optimiser l'action de l'air propulsé par le deuxième ventilateur fonctionnant en mode inversé sur le filtre en vue de son dépoussiérage. Le guide-flux présente dans ce cas en effet la forme d'un tube dont la section circulaire présente sensiblement le même diamètre que celui de la prise d'air, ce diamètre correspondant lui-même sensiblement au diamètre du cercle parcouru par les extrémités extérieures des pales du second ventilateur.

Egalement selon une variante préférentielle de l'invention, le dispositif récupérateur de chaleur selon celle ci comprend des moyens de brossage dudit filtre à poussières. Ces moyens de brossage sont préférentiellement prévus sur la face extérieure de la toile constituant le filtre. De tels moyens de brossage peuvent être ainsi constitués d'une brosse aux poils résistants dont l'action nettoyante sur le filtre permet de compléter l'action de l'air provenant du second ventilateur fonctionnant en mode inversé.

On notera à ce sujet que, selon des variantes de l'invention, ces moyens de brossage pourront être actionnés concomitamment ou non à l'inversion du sens de rotation du second ventilateur et qu'il pourra être envisagé plusieurs façons d'actionner ces moyens de brossage.

Préférentiellement, lesdits moyens de brossage sont montés rotatifs, avantageusement sur un axe de rotation se confondant avec celui dudit second ventilateur. L'énergie nécessaire à leur fonctionnement est ainsi minimisée.

Selon une variante, lesdits moyens de brossage sont actionnables par un moteur.

Toutefois, selon une variante intéressante, lesdits moyens de brossage seront actionnables, en l'absence de moteur, simplement par l'air propulsé par ledit second ventilateur. Dans ce but, les moyens de brossage seront montés rotatifs et pourvus de pales.

Egalement selon une variante intéressante de l'invention, le dispositif comprend des moyens de déclenchement automatique des moyens d'inversion du sens de rotation du second ventilateur. Ce déclenchement automatique peut notamment être mise en oeuvre à intervalles de temps fréquents et réguliers. Comme indiqué ci-dessus, il est ainsi possible de minimiser à chaque opération de nettoyage du filtre par inversion du sens de rotation du second ventilateur, les quantités de poussières renvoyées dans le bâtiment d'élevage.

### 5. Liste des figures

L'invention, ainsi que les différents avantages qu'elle présente, seront plus facilement compris, grâce à la description qui va suivre de modes non limitatifs de réalisation de celle-ci donnés en référence aux dessins dans lesquels :
- la figure 1 est une vue en perspective d'un dispositif récupérateur de chaleur pour bâtiment d'élevage de volailles selon l'art antérieur ;
- la figure 2 est une vue en perspective d'un premier mode de réalisation d'un dispositif récupérateur de chaleur pour bâtiment d'élevage de volailles selon l'invention ;
- la figure 3 est une vue de face du dispositif représenté à la figure 2 ;
- la figure 4 est une vue du filtre à poussière d'un second mode de réalisation d'un dispositif récupérateur de chaleur pour bâtiment d'élevage d'animaux selon l'invention.

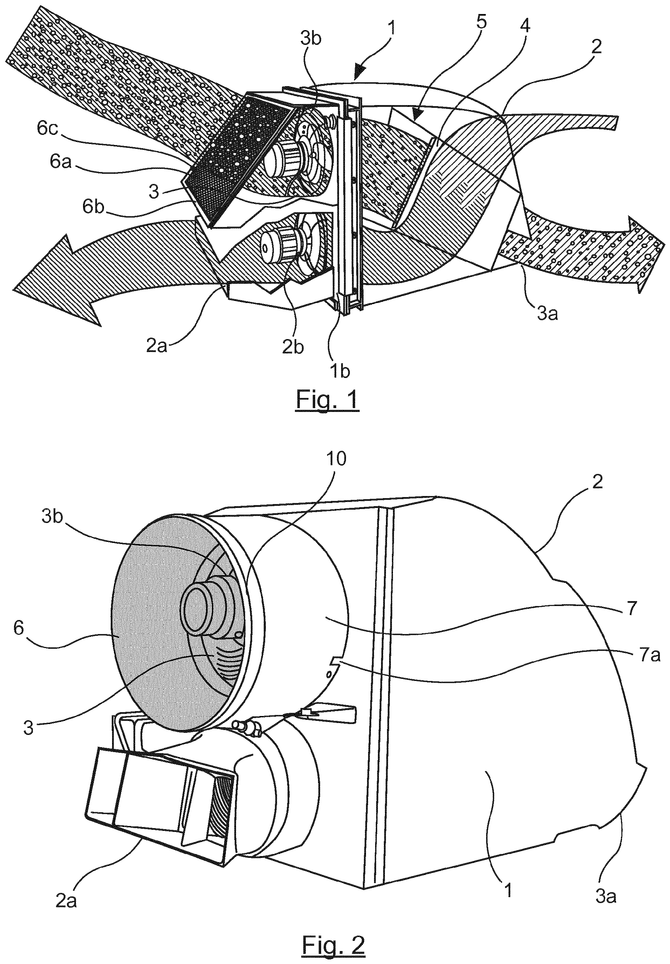

En référence à la figure 1 un dispositif récupérateur de chaleur de type air-air selon l'art antérieur est représenté.

Ce dispositif, spécialement conçu pour équiper des bâtiments d'élevage de volailles, est destiné à être inséré dans une paroi de ce bâtiment de façon telle que sa partie arrière se trouve placée à l'extérieur de celui-ci et que sa partie avant se trouve placée à l'intérieur de celui-ci.

Ce dispositif récupérateur de chaleur comprend un carter 1 incluant une porte 1b montée pivotante sur le reste du carter.

Ce carter 1 présente sur sa paroi arrière une prise d'air extérieur 2 et sur sa paroi avant une prise d'air intérieur 3.

Ce dispositif est également pourvu sur sa partie avant d'une sortie d'air réchauffé 2a et sur sa partie arrière d'une sortie d'air refroidi 3a.

La prise d'air extérieur coopère avec un premier ventilateur 2b et la prise d'air intérieur 3 coopère avec un second ventilateur 3b. Ces ventilateurs sont reliés à une source d'alimentation en énergie et sont, de façon classique, constitués de rotors à pales.

À l'intérieur du carter 1, des plaques alvéolaires 4 sont associées parallèles entre elles pour constituer un module 5 amovible.

La prise d'air intérieur est équipée d'un filtre à poussières 6a qui permet de retenir une partie des poussières présentes dans l'air du bâtiment entrant dans le dispositif. Ce filtre 6a comprend une plaque filtrante constituée par une superposition d'une dizaine de grilles en aluminium grâce à des boulons 6c.

Le fonctionnement de ce dispositif récupérateur de chaleur est le suivant.

L'air humide, chargé de poussières et chaud provenant de l'intérieur du bâtiment d'élevage de volailles est aspiré grâce au ventilateur 3b par la prise d'air intérieur 3 et transite entre les plaques alvéolaires 4 du module 5 avant d'être rejeté vers l'extérieur par la sortie d'air 3a. Lors de son passage entre les plaques 4, cet air transmet une partie de ses calories au matériau constituant ces plaques alvéolaires 4.

Concomitamment, l'actionnement du ventilateur 2b autorise l'aspiration par la prise d'air extérieur 2 d'air frais qui pénètre dans le carter pour passer dans les alvéoles prévues dans les plaques avant d'être rejeté par la sortie d'air 2a à l'intérieur du bâtiment. Lors de son passage dans les alvéoles des plaques 4 cet air extérieur sec et froid se réchauffe en captant des calories cédées par l'air provenant du bâtiment et rejeté à l'extérieur de celui-ci.

Les plaques alvéolaires 4 sont pourvues d'alvéoles constituées par des canaux longitudinaux et sont réalisées en un matériau présentant une conductivité thermique, à savoir le polypropylène copolymère.

En cours d'utilisation, le filtre à poussières 6a s'encrasse progressivement. Lorsqu'il est trop sale, il doit donc être nettoyé. Dans ce but, l'opérateur doit stopper le fonctionnement du dispositif, dévisser les vis des boulons 6c puis laver le filtre à poussières 6a avant de le repositionner sur le dispositif. La structure du filtre 6a constitué de deux grilles en inox, rend l'opération de nettoyage longue. En pratique, il est donc courant, pour ne pas perdre de temps de disposer d'un jeu de deux filtres 6a et de remplacer le filtre sale par un filtre propre.

De plus, le module 5 de plaques alvéolaires 4 s'encrasse progressivement du fait que l'air extrait du bâtiment est chargé en poussières et est humide. Cette humidité favorise le dépôt des poussières non bloquées par le filtre à poussières 6a entre les plaques 4 et il est donc nécessaire de procéder périodiquement au nettoyage du module 5.

Pour un nettoyage sommaire, l'exploitant peut se contenter d'ouvrir la porte 1b du carter 1 pour avoir accès au module 5 et, sans déplacer celui-ci, pour passer au jet d'eau ces plaques. L'eau souillée s'écoule par la sortie d'air 3a.

Toutefois, pour un nettoyage complet l'exploitant, après avoir ouvert la porte 1b du carter 1, peut sortir le module 5 du carter, celui-ci étant à cet effet pourvu d'une poignée (non représentée). Le module 5 peut alors être nettoyé en profondeur et ensuite replacé dans le carter 1 en vu d'un nouveau cycle d'utilisation.

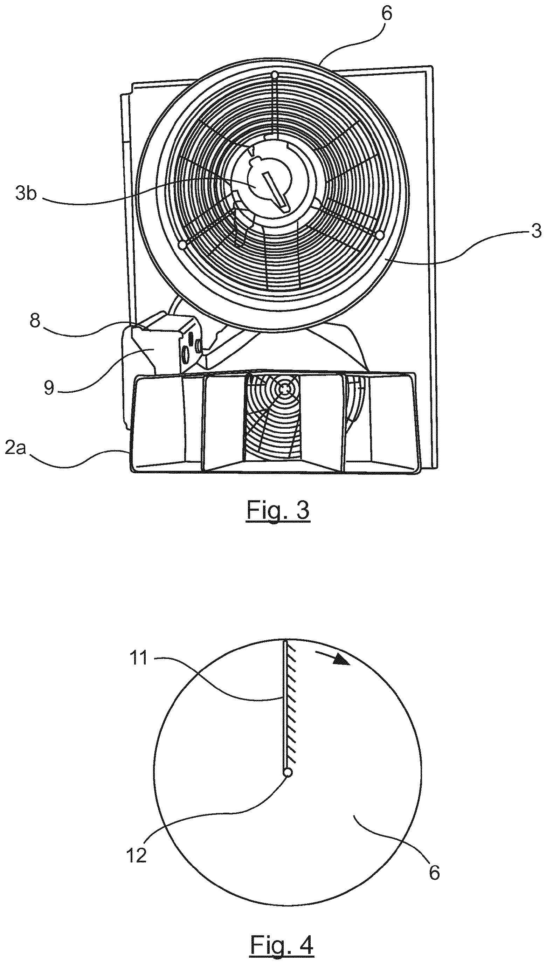

En référence aux figures 2 et 3 un premier mode de réalisation d'un dispositif récupérateur de chaleur de type air-air destiné à équiper un bâtiment d'élevage va maintenant être décrit. Dans ce premier mode de réalisation, les éléments qui présentent la même fonction que dans l'art antérieur portent les mêmes références que celles utilisées ci-dessus pour décrire celui-ci.

Selon la présente invention, ce premier mode de réalisation inclut un filtre à poussières 6 réalisé en toile de fibres de verre placé devant la prise d'air 3 qui présente une section circulaire. Un élément formant guide-flux 7 est intercalé entre ladite prise d'air intérieur 3 et ledit filtre à poussières 6, ledit élément formant guide-flux étant formé en un matériau plein, à savoir dans le cadre de ce mode de réalisation, un matériau plastique. Cet élément formant guide-flux 7 présente une forme essentiellement cylindrique adaptée à la section circulaire de la prise d'air intérieur 3. Il est pourvu de moyens de fixation réversibles 7a au carter 1 du dispositif. Cet élément guide-flux 7 sert de support et de cadre à la toile constituant le filtre 6. Un cerclage 10 est prévu pour maintenir en position le filtre 6 sur l'élément cylindrique formant guide-flux 7.

Egalement selon la présente invention, ce premier mode de réalisation inclut des moyens d'inversion du sens de rotation dudit second ventilateur 3b. En mode de rotation inversé, le second ventilateur permet de puiser de l'air à l'extérieur du bâtiment d'élevage et de le propulser à l'intérieur de celui-ci. Ces moyens d'inversion du sens de rotation du second ventilateur incluent une commande 8 prévue sur un coffret de commande 9 faisant saillie de la porte 1b du carter 1. Cette commande 8 est reliée à un relais inverseur prévu à l'intérieur du coffret. L'actionnement manuel de cette commande 8 par un opérateur permet de mettre à l'arrêt le second ventilateur 3b puis d'inverser le sens de rotation des pales de celui-ci. On notera que dans d'autres modes de réalisation, cette commande 8 pourra être reliée à un minuteur permettant le déclenchement automatique, à intervalles de temps régulier, des moyens d'inversion du sens de rotation dudit second ventilateur 3b.

Le dépoussiérage du filtre peut être initié en actionnant la commande 8. L'air alors envoyé par le ventilateur 3b est canalisé et accéléré par l'élément guide-flux 7 ce qui permet de déloger efficacement les poussières piégées par le filtre 6 et de les relarguer dans le bâtiment d'élevage. Cette opération de dépoussiérage est facilitée par la caractéristique selon laquelle le filtre est constitué d'une simple toile. En pratique, il suffit de quelques dizaines de secondes pour dépoussiérer le filtre. Lorsque le filtre est dépoussiéré, la commande 8 peut être actionnée de nouveau pour faire fonctionner le dispositif échangeur de chaleur.

L'opération de dépoussiérage du filtre peut être effectuée ainsi fréquemment sans avoir à démonter ce filtre pour le désolidariser du dispositif. Ainsi, le fonctionnement du filtre se trouve optimisé, rendant non obligatoire le nettoyage des plaques alvéolaires pendant une campagne d'élevage d'un lot de volailles, ce qui constitue un avantage non négligeable par rapport à l'art antérieur dans lequel le filtre à poussières doit être démonté pour être nettoyé et dans lequel le dépoussiérage du filtre ne rend pas facultatif le nettoyage des plaques alvéolaires pendant une campagne d'élevage.

En référence à la figure 4, dans un second mode de réalisation du dispositif récupérateur de chaleur selon la présente invention, par ailleurs identique au premier mode de réalisation, une brosse 11 est montée rotative sur la face extérieure du filtre 6. L'axe de rotation 12 de cette brosse se confond essentiellement avec l'axe de rotation du ventilateur 3b et avec l'axe de révolution du cylindre en matière plastique plein constituant le guide flux 7. Une telle brosse est actionnée par un moteur (non représenté) relié à la commande 8, qui la fait tourner lentement sur elle même (en pratique un tour par seconde environ). Le matériau constituant les poils de la brosse est un plastique souple tel que du nylon. Lorsque l'inversion du sens de rotation du ventilateur 3b est actionnée grâce cette commande 8, la brosse rotative 11 est actionnée en même temps de façon à optimiser encore l'opération de dépoussiérage du filtre 6.

## Revendications

1. Dispositif récupérateur de chaleur de type air-air destiné à équiper un bâtiment d'élevage, comprenant un carter (1) pourvu d'une prise d'air extérieur (2) coopérant avec un premier ventilateur (2b), d'une sortie d'air réchauffé (2a), d'une prise d'air intérieur (3) coopérant avec un second ventilateur (3b), d'une sortie d'air refroidi (3a), et une pluralité de plaques alvéolaires (4) organisée en un module amovible (5),
caractérisé et en ce que ladite prise d'air intérieur (3) est équipée d'un filtre à poussières amovible (6) constitué d'une toile, et en ce que ledit dispositif comprend des moyens d'inversion du sens de rotation dudit second ventilateur (3b) pour détacher les poussières retenues par le filtre et les renvoyer à l'intérieur dudit bâtiment d'élevage

2. Dispositif selon la revendication 1 **caractérisé en ce qu'**un élément formant guide-flux (7) est intercalé entre ladite prise d'air intérieur (3) et ledit filtre à poussières (6), ledit élément formant guide-flux étant réalisé en un matériau plein.

3. Dispositif selon la revendication 2 **caractérisé en ce que** ledit élément formant guide-flux (7) est amovible.

4. Dispositif selon la revendication 3 **caractérisé en ce que** ledit filtre à poussières (6) et ledit élément formant guide-flux (7) sont montés solidaires.

5. Dispositif selon l'une des revendications 2, 3 ou 4 **caractérisé en ce que** ladite prise d'air intérieur (3) est essentiellement circulaire et **en ce que** ledit élément formant guide-flux (7) présente essentiellement une forme de cylindre dont l'axe de révolution se confond avec l'axe de rotation dudit second ventilateur.

6. Dispositif selon l'une quelconque des revendications 1 à 5 **caractérisé en ce qu'**il comprend des moyens de brossage (11) dudit filtre à poussières.

7. Dispositif selon la revendication 6 **caractérisé en ce que** lesdits moyens de brossage (11) sont montés rotatifs.

8. Dispositif selon la revendication 6 ou 7 **caractérisé en ce qu'**il comprend un moteur pour actionner lesdits moyens de brossage.

9. Dispositif selon la revendication 6 ou 7 **caractérisé en ce que** lesdits moyens de brossage sont actionnables par l'air propulsé par ledit second ventilateur.

10. Dispositif selon l'une quelconque des revendications 1 à 9 **caractérisé en ce qu'**il comprends des moyens de déclenchement automatique des moyens d'inversion du sens de rotation dudit second ventilateur.

## Patentansprüche

1. Luft-Luft-Wärmerückgewinnungsvorrichtung zur Ausstattung eines Stallungsgebäudes, umfassend ein Gehäuse (1), das mit einem Außenluftanschluss (2), der mit einem ersten Ventilator (2b) zusammenwirkt, einem Auslass für die erwärmte Luft (2a), einem Innenluftanschluss (3), der mit einem zweiten Ventilator (3b) zusammenwirkt, einem Auslass für die abgekühlte Luft (3a) und mehreren Wabenplatten (4), die in einem abnehmbaren Modul (5) angeordnet sind, versehen ist,
**dadurch gekennzeichnet, dass** der Innenluftanschluss (3) mit einem abnehmbaren Staubfilter (6) ausgestattet ist, der aus einem Gewebe besteht, und dadurch, dass die Vorrichtung Mittel zur Umkehrung der Drehrichtung des zweiten Ventilators (3b) umfasst, um den Staub, der von dem Filter zurückgehalten wird, zu lösen und ihn ins Innere des Stallgebäudes zurückzuschicken.

2. Vorrichtung nach Anspruch 1, **dadurch gekennzeichnet, dass** ein Element, das einen Strömungslenker (7) bildet, zwischen dem Innenluftanschluss (3) und dem Staubfilter (6) eingesetzt ist, wobei das Element einen Strömungslenker bildet, der aus einem Vollmaterial hergestellt ist.

3. Vorrichtung nach Anspruch 2, **dadurch gekennzeichnet, dass** das Element, das einen Strömungslenker (7) bildet, abnehmbar ist.

4. Vorrichtung nach Anspruch 3, **dadurch gekennzeichnet, dass** der Staubfilter (6) und das Element, das einen Strömungslenker (7) bildet, fest miteinander verbunden sind.

5. Vorrichtung nach einem der Ansprüche 2, 3 oder 4, **dadurch gekennzeichnet, dass** der Innenluftanschluss (3) im Wesentlichen kreisförmig ist, und dadurch, dass das Element, das einen Strömungslenker (7) bildet, im Wesentlichen eine Zylinderform aufweist, dessen Umwälzachse in die Drehachse des zweiten Ventilators übergeht.

6. Vorrichtung nach einem der Ansprüche 1 bis 5, **dadurch gekennzeichnet, dass** es Mittel zum Bürsten (11) des Staubfilters umfasst.

7. Vorrichtung nach Anspruch 6, **dadurch gekennzeichnet, dass** die Mittel zum Bürsten (11) drehbar angebracht sind.

8. Vorrichtung nach Anspruch 6 oder 7, **dadurch gekennzeichnet, dass** sie einen Motor zum Betätigen der Mittel zum Bürsten umfasst.

9. Vorrichtung nach Anspruch 6 oder 7, **dadurch gekennzeichnet, dass** die Mittel zum Bürsten mittels der von dem zweiten Ventilator angetriebenen Luft betätigbar wird.

10. Vorrichtung nach einem der Ansprüche 1 bis 9, **dadurch gekennzeichnet, dass** sie Mittel zum automatischen Auslösen der Mittel zur Umkehrung der Drehrichtung des zweiten Ventilators umfasst.

## Claims

1. Heat recovery device of the air-to-air type intended for a livestock building, comprising a housing (1) fitted with an outside air intake (2) cooperating with a first fan (2b), a reheated air outlet (2a), an inside air intake (3) cooperating with a second fan (3b), a cooled air outlet (3a), and a plurality of cellular plates (4) organised in a removable module (5),
**characterised in that** said inside air intake (3) is fitted with a removable dust filter (6) made of fabric, and **in that** said device comprises means for reversing the direction of rotation of said second fan (3b) in order to detach the dust retained by the filter and sending it back into the inside of the livestock building.

2. Device according to Claim 1, **characterised in that** an element forming a flow-guide (7) is interposed between said inside air intake (3) and said dust filter (6), said flow-guide forming element being made of a solid material.

3. Device according to Claim 2, **characterised in that** said flow-guide forming element (7) is removable.

4. Device according to Claim 3, **characterised in that** said dust filter (6) and said flow-guide forming element (7) are mounted integrally.

5. Device according to any one of Claims 2, 3 or 4, **characterised in that** said inside air intake (3) is essentially circular and **in that** said flow-guide forming element (7) essentially has a cylindrical shape, the axis of rotation of which coincides with the axis of rotation of said second fan.

6. Device according to any one of Claims 1 to 5, **characterised in that** it comprises brushing means (11) for said dust filter.

7. Device according to Claim 6, **characterised in that** said brushing means (11) are mounted rotatably.

8. Device according to Claim 6 or 7, **characterised in that** it comprises a motor for driving the brushing means.

9. Device according to Claim 6 or 7, **characterised in that** said brushing means can be actuated by the air propelled by said second fan.

10. Device according to any one of Claims 1 to 9, **characterised in that** it comprises means for automatically starting means for reversing the direction of rotation of said second fan.
